# EUROPÄISCHE PATENTANMELDUNG

(11) **EP 1 584 532 A1**
(43) Veröffentlichungstag der Anmeldung: **12.10.2005**
(21) Anmeldenummer: 05101920.6
(22) Anmeldetag: 11.03.2005
(51) Int. Cl.: B60T 8/00, B60R 16/02

(54) **Fahrzeugsystem mit zusammengefassten Steuergeräten**

(30) Priorität: 08.04.2004 DE 102004017386
(71) Anmelder: ROBERT BOSCH GMBH, 70442 Stuttgart (DE)
(72) Erfinder: Baumann, Dietmar, 71282, Hemmingen (DE); Hofmann, Dirk, 71636, Ludwigsburg (DE); Vollert, Herbert, 71665, Vaihingen/Enz (DE); Nagel, Willi, 71686, Remseck/Hochdorf (DE); Henke, Andreas, 34474, Diemelstadt (DE); Foitzik, Bertram, 71636, Ludwigsburg (DE); Goetzelmann, Bernd, 71696, Moeglingen (DE)

(57) **Zusammenfassung**

Die Erfindung betrifft ein Fahrzeugsystem zur Beeinflussung des Fahrverhaltens eines Fahrzeugs, insbesondere ein Bremssystem mit mehreren gleichwirkenden Stellgliedern (1), wenigstens einem mit den Stellgliedern (1) verbundenen Steuergerät (2) und einem mit dem Steuergerät (2) verbundenen Sensor (3), in Abhängigkeit von dessen Zustand die Stellglieder (1) angesteuert werden. Der Aufwand für die Kommunikation zwischen den einzelnen Steuergeräten und zwischen den Steuergeräten und der Sensorik kann wesentlich vereinfacht werden, wenn ein Steuergerät 14,15 derart realisiert wird, dass es mehreren Stellgliedern (1) zugeordnet ist, wobei das Steuergerät (14,15) als bauliche Einheit realisiert ist.

## Beschreibung

Die Erfindung betrifft ein Fahrzeugsystem, insbesondere ein elektromechanisches Fahrzeugsystem, zur Beeinflussung des Fahrverhaltens eines Fahrzeugs gemäß dem Oberbegriff des Patentanspruchs 1.

Beispiele für solche Fahrzeugsysteme sind z.B. elektromechanische Bremssysteme, aktive Lenksysteme AFS (Active Front Steering), aktive Fahrwerke ARC (Active Roll Compensation) oder Systeme zur Beeinflussung der Reifeneigenschaften, etc.. Diese Systeme umfassen üblicherweise ein oder mehrere Stellglieder (z.B. Fahrzeugbremsen, einen Lenksteller oder eine aktive Feder-/Dämpfereinheit), ein Steuergerät, sowie mehrere mit dem Steuergerät verbundene Sensoren (z.B. einen Bremspedalsensor, einen Lenkradwinkelsensor oder einen Wankneigungssensor). Die Fahrzeugsysteme sind somit in der Lage, durch Stelleingriffe in den Fahrbetrieb des Fahrzeugs einzugreifen.

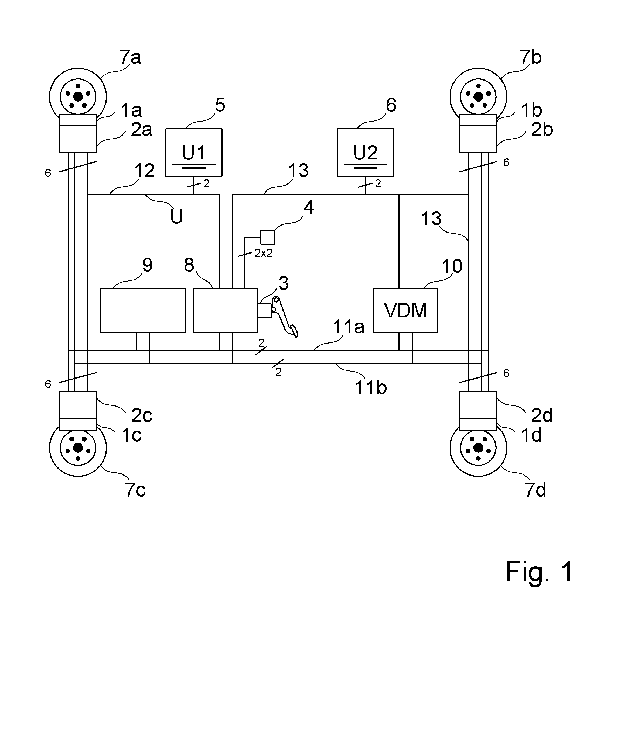

Fig. 1 zeigt ein aus dem Stand der Technik bekanntes mechatronisches System am Beispiel eines Bremssystems (sogenanntes Brake-By-Wire-System). Das Bremssystem umfasst mehrere verteilte Steuergeräte 2a-2d, die jeweils einer Radbremse 1a-1d zugeordnet sind. Die Radbremsen 1 sind hier als elektromechanische Bremssteller (Elektromotoren) realisiert, die mit dem zugehörigen Steuergerät 2 unmittelbar an den Rädern 7a-7d angeordnet sind.

Bei einer Betätigung des Fuß-Bremspedals 3 wird der Bremswunsch von einem Pedalmodul 8 verarbeitet und per Datenbus 11a, 11b an die einzelnen Steuergeräte 2 übermittelt. Das Pedalmodul 8 verarbeitet auch eine Feststellbrems-Anforderung, die vom Fahrer über das Bedienelement 4 der Feststellbremse angefordert wird.

Die Steuergeräte 2 kommunizieren über das Bussystem 11a, 11b miteinander und tauschen z.B. Informationen betreffend die Funktionsfähigkeit der einzelnen Elemente oder betreffend die Bremskraftverteilung untereinander aus. Die Steuergeräte sind i.d.R. "fail silent" realisiert, d.h. sie arbeiten nur, solange kein Fehler vorliegt und sind im Fehlerfall ruhig. Das Bussystem 11 ist aus Sicherheitsgründen redundant ausgeführt und umfasst daher zwei Busleitungen 11a, 11b.

Ein Cockpitmodul 9 (Anzeigeeinrichtung im Cockpit), das ebenfalls am Bussystem 11 angeschlossen ist, empfängt den aktuellen Zustand des Bremssystems und kann dem Fahrer somit entsprechende Informationen oder Warnhinweise geben. Die Signalisierung an den Fahrer kann z.B. optisch oder akustisch erfolgen.

Am Bussystem 11 ist ferner ein Steuergerät 10 angeschlossen, in dem ein Fahrdynamikregelungsalgorithmus hinterlegt ist. Dabei kann es sich grundsätzlich um jeden beliebigen Algorithmus handeln, der kritische Fahrsituationen erkennen und zu Zwecken der Stabilisierung in den Fahrbetrieb eingreifen kann. Bekannte Regelalgorithmen sind z.B. ESP (elektronisches Stabilitätsprogramm), ABS (Antriebsblockiersystem), ASR (Antriebsschlupfregelung), VDM (Vehicle Dynamics Managment), sowie Mehrwertfunktionen zur Wankstabilisierung, wie z.B. ROM (Roll Over Mitigation), ARC (Active Roll Control) oder lenkungsgestützte Stabilisierungssysteme wie z.B. AFS (Active Front Steering).

Im dargestellten Beispiel sind die Steuergeräte 2a,2c bzw. 2b,2d der Vorder- bzw. Hinterachse an unterschiedlichen elektrischen Netzen 12,13 angeschlossen und werden von getrennten Spannungsquellen 5,6 mit elektrischer Energie versorgt. Das Pedalmodul 8, das eine Bremsanforderung des Fahrers an die einzelnen Steuergeräte 2 übermittelt, ist aus Sicherheitsgründen an beiden Teilnetzen 12,13 angeschlossen und arbeitet redundant.

Ein wesentlicher Nachteil solcher verteilter Steuersysteme besteht darin, dass sie wegen der notwendigen redundanten Ausführung sehr aufwändig, komplex und damit auch teuer sind. Jedes der Steuergeräte 2 benötigt beispielsweise eine redundante Kommunikations-Steuereinheit, die Busleitungen 11a, 11b müssen auf unterschiedlichen Wegen redundant ausgeführt werden, und auch die übrigen Systemelemente, wie z.B. das Pedalmodul 8 oder das Steuergerät 10 müssen redundant arbeiten. Darüber hinaus sind die Steuergeräte 2 nahe den Rädern 7 in den Radkästen angeordnet und somit starken Belastungen ausgesetzt.

Es ist daher die Aufgabe der vorliegenden Erfindung, ein mechatronisches Fahrzeugsystem, wie z.B. ein Bremssystem, ein Lenksystem oder ein Fahrwerksystem wesentlich einfacher, kostengünstiger und auch sicherer zu gestalten.

Gelöst wird diese Aufgabe gemäß der Erfindung durch die im Patentanspruch 1 angegebenen Merkmale. Weitere Ausgestaltungen der Erfindung sind Gegenstand von Unteransprüchen.

Ein wesentlicher Gedanke der Erfindung besteht darin, die Funktionalität mehrerer verteilter Steuergeräte in einem Steuergerät zu vereinen, also ein Steuergerät vorzusehen, das mehreren Stellgliedern zugeordnet ist und dieses Steuergerät als bauliche Einheit in einem Gehäuse unterzubringen, das an einem Ort am Fahrzeug montiert wird, an dem das Steuergerät geringeren mechanischen oder thermischen Belastungen ausgesetzt ist. Als "Steuergerät" wird hier insbesondere eine bauliche Einheit verstanden, die in der Lage ist Sensorsignale zu empfangen, diese zu verarbeiten und Ansteuersignale an ein oder mehrere Stellglieder auszugeben. Das "zusammengefasste" Steuergerät enthält zu diesem Zweck vorzugsweise mehrere Steuermodule (als Hardware), die unterschiedlichen Stellgliedern zugeordnet sind. Dies hat den wesentlichen Vorteil, dass die Kommunikation zwischen den einzelnen Steuermodulen wesentlich einfacher gestaltet werden kann als die Kommunikation bisher zwischen den verteilten Steuergeräten.

Gemäß einer bevorzugten Ausführungsform der Erfindung sind sämtliche Steuerfunktionen des Fahrzeugsystems in einem einzigen Steuergerät, d.h. in einer einzigen baulichen Einheit, zusammengefasst, wobei das Steuergerät allen (gleichwirkenden) Stellgliedern des Fahrzeugsystems zugeordnet ist. Dadurch kann die Kommunikationsverbindung zwischen den einzelnen Steuermodulen sehr einfach und kostengünstig realisiert werden.

Die Kommunikationsverbindung zwischen den Steuermodulen des Steuergeräts ist vorzugsweise als Punkt-Zu-Punkt-Verbindung (Peer-to-Peer) realisiert. D.h. die Datenübermittlung erfolgt nur zwischen jeweils genau zwei Steuermodulen, weitere Einrichtungen sind nicht an der Verbindung angeschlossen. Die Datenübermittlung kann somit besonders einfach und sicher ausgeführt werden.

Die Steuermodule eines Steuergeräts sind vorzugsweise mechanisch und/oder thermisch entkoppelt. Zum Schutz gegen auftretende Umweltbelastungen können die einzelnen Module z.B. eingegossen oder mit Gel überzogen werden. Zum thermischen Schutz können z.B. Temperaturbarrieren eingebaut werden, um zu verhindern, dass ein überhitztes Steuermodul ein anderes Steuermodul ebenfalls thermisch überlastet.

Das Steuergerät ist vorzugsweise nahe einem Sensor des Fahrzeugsystems, wie z.B. nahe den Bremspedalsensoren, Lenkradsensoren, angeordnet. Dadurch können die Sensoren einfach, sicher und kostengünstig an das "zusammengefasste" Steuergerät angekoppelt werden.

Die Steuermodule innerhalb eines Steuergeräts sind vorzugsweise identisch aufgebaut. Dadurch ergibt sich eine wesentliche Vereinfachung des Systems und eine erhebliche Kostenreduktion.

Die Steuermodule eines Steuergeräts werden aus Sicherheitsgründen vorzugsweise von wenigstens zwei verschiedenen Spannungsquellen mit Energie versorgt.

Eine weitere wesentliche Vereinfachung des Fahrzeugsystems ergibt sich, wenn ein mit dem Steuergerät verbundener Sensor (z.B. der Fahrpedalsensor) nicht über eine Busleitung, sondern über eine herkömmliche elektrische Leitung mit dem Steuergerät verbunden ist.

Die Erfindung wird nachstehend anhand der beigefügten Zeichnungen beispielhaft näher erläutert. Es zeigen:
Fig. 1 ein aus dem Stand der Technik bekanntes Bremssystem mit verteilten Steuergeräten;
Fig. 2 ein elektromechanisches Bremssystem mit zusammengefassten Steuergeräten gemäß einer ersten Ausführungsform der Erfindung;
Fig. 3 ein elektromechanisches Bremssystem mit einem einzigen zusammengefassten Steuergerät gemäß einer zweiten Ausführungsform der Erfindung;
Fig. 4 ein Ausführungsbeispiel eines Steuergeräts mit zwei Steuermodulen; und
Fig. 5 ein Ausführungsbeispiel eines Steuergeräts mit vier Steuermodulen.

Bezüglich der Erläuterung von Fig. 1 wird auf die Beschreibungseinleitung verwiesen.

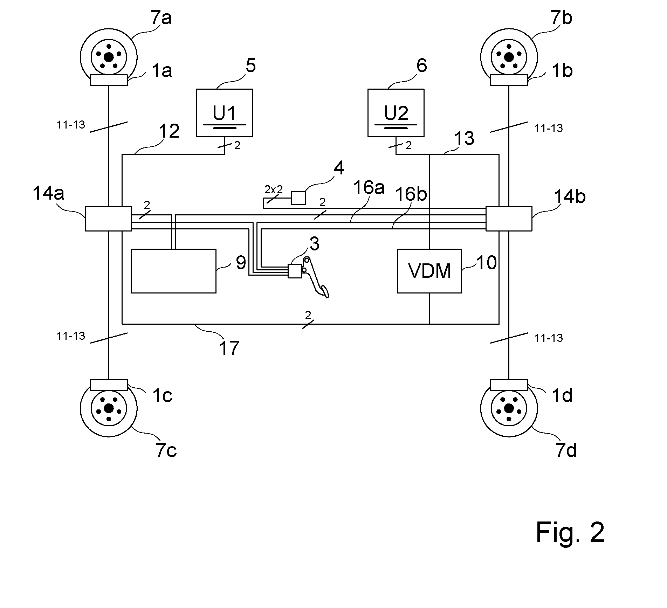

Fig. 2 zeigt ein elektromechanisches Bremssystem mit zwei "zusammengefassten" Steuergeräten 14a,14b, die jeweils achsweise den Bremsstellern 1a, 1c bzw. 1b, 1d zugeordnet sind. Ein einzelnes Steuergerät 14a bzw. 14b übernimmt jeweils die Steuerfunktion für zwei der Bremssteller 1. Die Steuergeräte 14a,14b sind von den Bremsstellern räumlich entfernt jeweils in einem geschlossenen Gehäuse untergebracht.

Die Steuergeräte 14a,14b sind jeweils über herkömmliche elektrische Leitungen 16a,16b mit der Sensorik des Fuß-Bremspedals 3 verbunden, wobei die Leitungen 16a,16b aus Sicherheitsgründen redundant ausgeführt sind. Im Falle einer Bremsanforderung durch den Fahrer an der Fußbremse 3 oder dem Bedienelement 4 der Feststellbremse, werden die Stellglieder 1 des Bremssystems gemäß einer vorgegebenen Bremsfunktion angesteuert, die in den Steuergeräten 14a,14b als Software hinterlegt ist. Die Kommunikation zwischen den Steuergeräten 14a,14b erfolgt über einen Bus 17, wie z.B. eine CAN, an dem auch das Steuergerät 10 der Fahrdynamikregelung angeschlossen ist.

Die beiden Steuergeräte 14a,14b werden von unterschiedlichen Spannungsquellen 5 bzw. 6 mit elektrischer Energie versorgt. Das Cockpitmodul 9 ist ebenfalls über eine Busleitung an den Steuergeräten 14a,14b angeschlossen.

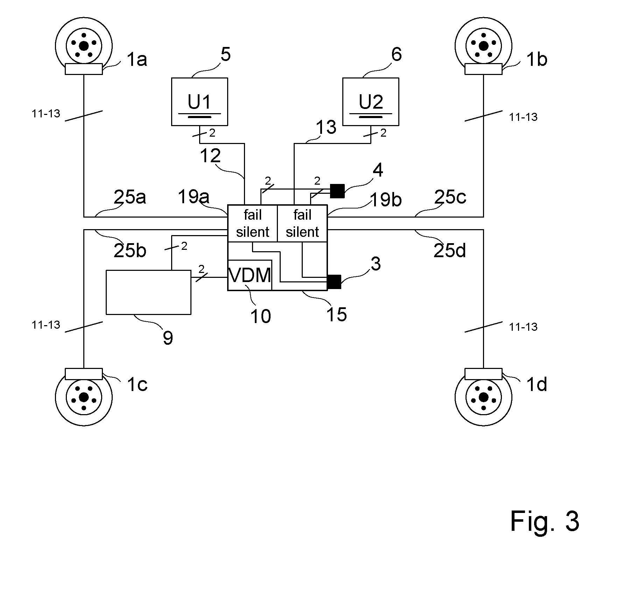

Fig. 3 zeigt ein elektromechanisches Bremssystem, bei dem die gesamte Steuerfunktionalität für die Bremssteller 1 in einem einzigen Steuergerät 15 untergebracht ist. In diesem Steuergerät 15 kann z.B. auch der Regelalgorithmus eines Fahrdynamikregelungssystems (z.B. ESP ,VDM), sowie dessen Zusatzfunktionen (z.B. ROM, ARC) implementiert sein.

Das Steuergerät 15 umfasst hier zwei separate Steuermodule 19a,19b, denen jeweils zwei Bremssteller 1, z.B. 1a, 1c und 1b, 1d, zugeordnet sind. Das Steuergerät 15 ist unmittelbar an der Pedalsensorik angeordnet, die somit besonders einfach und kostengünstig an das Steuergerät 15 angekoppelt werden kann.

Die Kommunikation zwischen den beiden Steuermodulen 19a und 19b erfolgt über eine Punkt-Zu-Punkt-Verbindung (Peer-to-Peer), die die Busverbindung 11 bzw. 17, wie sie in Fig. 1 oder Fig. 2 realisiert ist, ersetzt.

Das Steuergerät 15 wird von zwei Spannungsquellen 5,6 redundant versorgt und ist mit dem Cockpitmodul 9 verbunden. Die Verbindung des Steuergeräts 15 zu den Bremsstellern 1 ist durch herkömmliche elektrische Leitungen 25a-25d realisiert.

Die Gestaltung eines Bremssystems mit nur einem einzigen Steuergerät 15 ermöglicht den geringsten Kommunikationsaufwand. Die Busleitungen 11 zwischen Sensor 3 und Steuergerät 2 und ein Datenbus 17 zwischen den Steuergeräten 14, wie sie in den Fig. 1 und 2 dargestellt sind, werden hier durch einfache elektrische Leitungen 25 ersetzt.

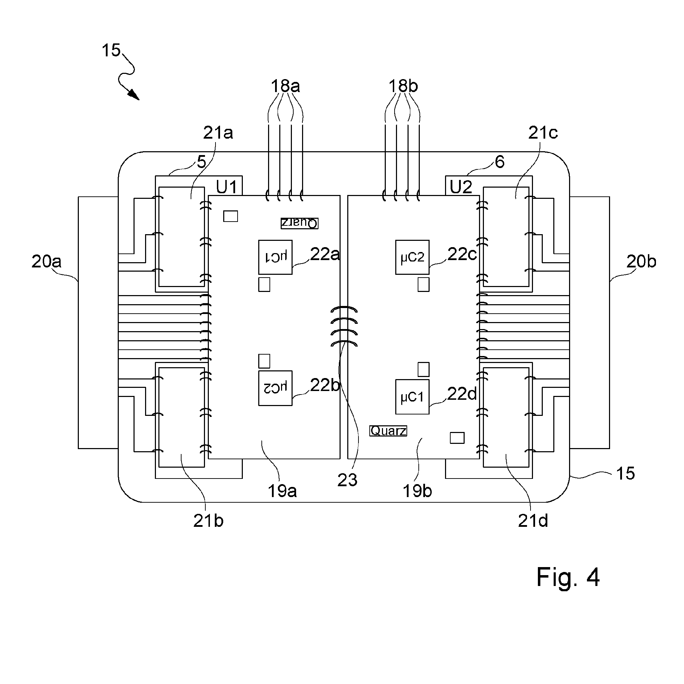

Fig. 4 zeigt eine mögliche Ausführungsform eines Steuergeräts 15 von Fig. 3. Das Steuergerät 15 umfasst zwei mechanisch getrennte Steuermodule 19a,19b, die jeweils zwei Bremsstellern 1 zugeordnet sind. Jedes der Steuermodule 19a,19b ist über Anschlüsse 18a,18b an die Sensorik 3,4 des Bremssystems angekoppelt und kann mittels der Steckverbindungen 20a,20b an die zugehörigen Bremssteller 1 angeschlossen werden.

Die Steuermodule 19a,19b umfassen jeweils eine Prozessoreinheit 22a-22d für jeden der Bremssteller 1. Das Steuergerät 15 umfasst außerdem jeweils eine Leistungsendstufe 21a-21d für jeden der Bremssteller 1 (Elektromotoren), die direkt an die Steuermodule 19 gebondet sind.

Die Steuermodule 19a,19b sind baugleich ausgeführt und um 180° gedreht miteinander verbunden. Die Kommunikation zwischen den beiden Modulen 19a,19b erfolgt über eine Punkt-Zu-Punkt-Verbindung 23. Das Steuermodul 19a wird von einer Spannungsquelle 5 und das Steuermodul 19b von einer Spannungsquelle 6 versorgt. Die im Gehäuse des Steuergeräts 15 enthaltenen Baugruppen können thermisch voneinander isoliert und gegebenenfalls auch eingegossen oder mit einem Gel überzogen werden. Wahlweise kann auch das gesamte Steuergerät 15 geschützt werden.

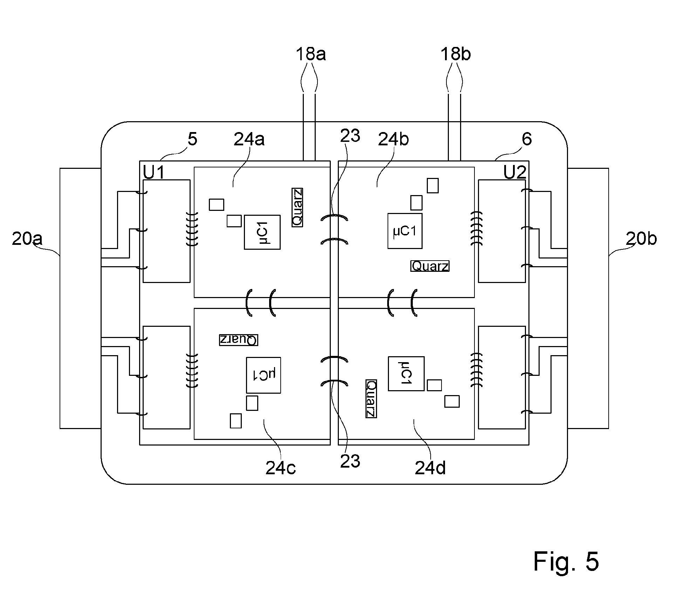

Fig. 5 zeigt eine weitere Ausführungsform eines Steuergeräts 15, ähnlich wie in Fig. 4. Bei diesem Ausführungsbeispiel sind separate (mechanisch voneinander getrennte) Steuermodule 24a-24d für jeden der Bremssteller 1 vorgesehen, um das Steuergerät insgesamt noch robuster zu machen. Zwischen den einzelnen Modulen 24a-24d besteht jeweils eine Punkt-Zu-Punkt-Verbindung 23. Die einzelnen Steuermodule 24 sind wiederum identisch aufgebaut und gedreht angeordnet. Im übrigen entspricht der Aufbau des Steuergeräts 15 demjenigen von Fig. 4.

Die gleichen Aussagen, wie sie vorstehend am Beispiel eines elektromechanischen Bremssystems gemacht wurden, gelten gleichermaßen auch für andere Fahrzeugsysteme, wie z.B. aktive Lenksysteme oder aktive Fahrwerke, etc. In diesem Fall wären die Stellglieder 1 des Systems z.B. Lenksteller bzw. aktive Feder-/Dämpferelemente. Die Anordnung und Verdrahtung der einzelnen Elemente des Steuergeräts 15 verändert sich dadurch jedoch nicht.

### Bezugszeichenliste

- 1: Bremssteller
- 2: Steuergeräte
- 3: Fuß-Bremspedal
- 4: Bedienelement der Feststellbremse
- 5: Erste Spannungsquelle
- 6: Zweite Spannungsquelle
- 7: Räder
- 8: Pedalmodul
- 9: Cockpitmodul
- 10: Steuergerät
- 11: Busleitungen
- 12: Erstes Teilnetz
- 13: Zweites Teilnetz
- 14: Steuergerät
- 15: Steuergerät
- 16: Elektrische Leitungen
- 17: Busverbindung
- 18: Sensoreingänge
- 19: Steuermodule
- 20: Stecker
- 21: Motor-Endstufen
- 22: Prozessoreinheiten
- 23: Punkt-zu-Punkt-Verbindungen
- 24: Steuermodule
- 25: Steuerleitungen

## Patentansprüche

1. Vorrichtung zur Beeinflussung des Fahrverhaltens eines Fahrzeugs, insbesondere in Form eines Bremssystems, Lenksystems oder eines aktiven Fahrwerks, mit mehreren Stellgliedern (1), wenigstens einem mit den Stellgliedern (1) verbundenen Steuergerät (2) und einem mit dem Steuergerät (2) verbundenen Sensor (3), **dadurch gekennzeichnet, dass** wenigstens ein Steuergerät (14,15) vorgesehen ist, das mehreren Stellgliedern (1) zugeordnet ist, wobei das Steuergerät (14,15) als bauliche Einheit realisiert ist.

2. Vorrichtung nach Anspruch 1, **dadurch gekennzeichnet, dass** ein Steuergerät (15) vorgesehen ist, das allen Stellgliedern (1a-1d) der Vorrichtung zugeordnet ist.

3. Vorrichtung nach Anspruch 1 oder 2, **dadurch gekennzeichnet, dass** das Steuergerät (14,15) mehrere Steuermodule (19,24) aufweist, die verschiedenen gleichwirkenden Stellgliedern (1) zugeordnet sind.

4. Vorrichtung nach Anspruch 3, **dadurch gekennzeichnet, dass** die Steuermodule (19,24) mechanisch entkoppelt sind.

5. Vorrichtung nach Anspruch 3 oder 4, **dadurch gekennzeichnet, dass** die Steuermodule (19,24) thermisch gegeneinander isoliert sind.

6. Vorrichtung nach einem der Ansprüche 3 bis 5, **dadurch gekennzeichnet, dass** die Steuermodule (19,24) identisch aufgebaut sind.

7. Vorrichtung nach einem der vorhergehenden Ansprüche 3 bis 6, **dadurch gekennzeichnet, dass** wenigstens zwei der Steuermodule (19,24) über eine Punkt-Zu-Punkt-Verbindung (23) miteinander verbunden sind.

8. Vorrichtung nach Anspruch 7, **dadurch gekennzeichnet, dass** über die Punkt-Zu-Punkt-Verbindung (23) eine Information über die Verteilung einer Stellgröße übermittelt wird.

9. Vorrichtung nach einem der vorhergehenden Ansprüche, **dadurch gekennzeichnet, dass** wenigstens zwei der Steuermodule (19,24) von verschiedenen Spannungsquellen (5,6) versorgt werden.

10. Vorrichtung nach einem der vorhergehenden Ansprüche, **dadurch gekennzeichnet, dass** der Sensor (3) über eine herkömmliche Leitung (16) mit dem Steuergerät (14,15) verbunden ist.
